# EUROPÄISCHE PATENTANMELDUNG

(11) **EP 0 845 203 A2**
(43) Veröffentlichungstag der Anmeldung: **03.06.1998**
(21) Anmeldenummer: 97120516.6
(22) Anmeldetag: 22.11.1997
(51) Int. Cl.: A01G 1/00

(54) **Verfahren zur Bereitstellung von Blumenerde sowie Einrichtung zur Durchführung dieses Verfahren**

(30) Priorität: 02.12.1996 AT 707/96
(71) Anmelder: Glück, Josef, 5081 Niederalm (AT)
(72) Erfinder: Glück, Josef, 5081 Niederalm (AT)
(74) Vertreter: Hofinger, Engelbert, DDr.

(57) **Zusammenfassung**

Beschrieben wird ein Verfahren zur Bereitstellung von Blumenerde, wobei die Blumenerde zuerst zu Ballen verpreßt wird und die Auflockerung, Verkleinerung und Verteilung des Preßballens (13) durch maschinelles Abschaben der Oberfläche einer Planfläche des Preßballens (13) mittels einer Einrichtung erfolgt, bei der an einer umlaufenden Lastgliederkette (5) Werkzeugträger (6) mit daran befestigten Zerkleinerungs- bzw. Schabwerkzeugen (7) angeordnet sind.

## Beschreibung

Die vorliegende Erfindung betrifft ein Verfahren zur Bereitstellung von Blumenerde, wobei die Blumenerde zuerst zu Ballen verpreßt wird, sowie eine Einrichtung zur Durchführung dieses Verfahrens.

Um Verpackungsmaterial und damit verbundene Kosten zu sparen, bestehen seit einiger Zeit Bestrebungen, Torf, Blumenerden und ähnliche Materialien nicht in kleinen, einzeln zu verpackenden Säcken zu transportieren, sondern in Form großer, verpreßter Ballen. Bei Torf ist diese kostengünstige Verpackungsvariante äußerst beliebt, was auf zwei Gründe zurückzuführen ist: Einerseits zerfallen die Preßballen aus Torf nach dem Entfernen der sie umgebenden Kunststoffhülle aufgrund der speziellen Konsistenz von Torf sehr leicht und können somit problemlos weiterverarbeitet werden. Andererseits werden vom Torf meist große Mengen benötigt, die vor Ort großflächig verteilt werden.

Gänzlich anders stellt sich jedoch die Situation bei Blumenerden dar. Bei verpreßten Ballen von Blumenerde ergibt sich das Problem, daß diese aufgrund des hohen Feuchtigkeits- und Tongehaltes für die Weiterverarbeitung nur schwierig aufgelockert und zerkleinert werden kann. Diese Zerkleinerung ist jedoch notwendig, da Blumenerde vorwiegend in Gärtnereien zum Befüllen von Blumentöpfen verwendet wird, was eine homogene, kleinstückige Struktur voraussetzt. Aufgrund der erwähnten Eigenschaften von verpreßter Blumenerde war es daher bisher notwendig, die verpreßten Ballen in den Gärtnereien händisch aufzulockern und zu zerkleinern. Durch die damit verbundenen Arbeitskosten war zu Ballen verpreßte Blumenerde bisher kaum verkäuflich.

Aufgabe der vorliegenden Erfindung ist es daher, ein Verfahren zur Bereitstellung von Blumenerde sowie eine Einrichtung zur Durchführung dieses Verfahrens anzubieten, bei dem verpreßte Blumenerde maschinell und somit kostengünstig für die Weiterverarbeitung aufgelockert und zerkleinert wird.

Dies wird erfindungsgemäß dadurch erreicht, daß die Auflockerung, Verkleinerung und Verteilung des Preßballens durch maschinelles Abschaben der Oberfläche einer Planfläche des Preßballens erfolgt.

Durch dieses Verfahren kann die jeweils benötigte Menge an Blumenerde kontinuierlich oder portionsweise bereitgestellt werden. Dabei ist vorteilhaft vorgesehen, daß die vom Preßballen abgearbeitete, aufgelockerte Blumenerde einer Topfmaschine zugeführt wird.

Eine besonders einfache Lösung ergibt sich dann, wenn der zum Abschaben notwendige Anpreßdruck durch das Eigengewicht der hierfür vorgesehenen an Preßballen aufliegenden Einrichtung erzielt wird.

Die erfindungsgemäße Einrichtung zeichnet sich dadurch aus, daß an einer umlaufenden Lastgliederkette Werkzeugträger mit daran befestigten Zerkleinerungs- bzw. Schabwerkzeugen angeordnet sind. Wird die Lastgliederkette bewegt, so kratzen die am Werkzeugträger befestigten, meist scharfkantigen Zerkleinerungs- bzw. Schabwerkzeuge an der Oberseite des Preßballens und lösen dabei kleine Teilchen von Blumenerde aus dem Ballen. Der Vorgang entspricht im wesentlichen dem in der Landwirtschaft gebräuchlichen 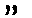 Eggen", bei welchem grobstückige Erdschollen durch das Überstreichen mit scharfen Zinken zerkleinert werden.

In einer bevorzugten Ausführungsform ist vorgesehen, daß die Lastgliederkette mit unterschiedlicher Geschwindigkeit antreibbar ist. Dies bietet den Vorteil, daß die Bearbeitungsgeschwindigkeit an die jeweils gewünschte Flockigkeit der Blumenerde und die notwendige Auswurfweite angepaßt werden kann.

Eine weitere Anpassungsmöglichkeit ergibt sich dadurch, daß der Anstellwinkel der Zerkleinerungs- bzw. Schabwerkzeuge einstellbar ist.

Weitere Merkmale und Einzelheiten der vorliegenden Erfindung ergeben sich aus der nachfolgenden Figurenbeschreibung.

Dabei zeigt:

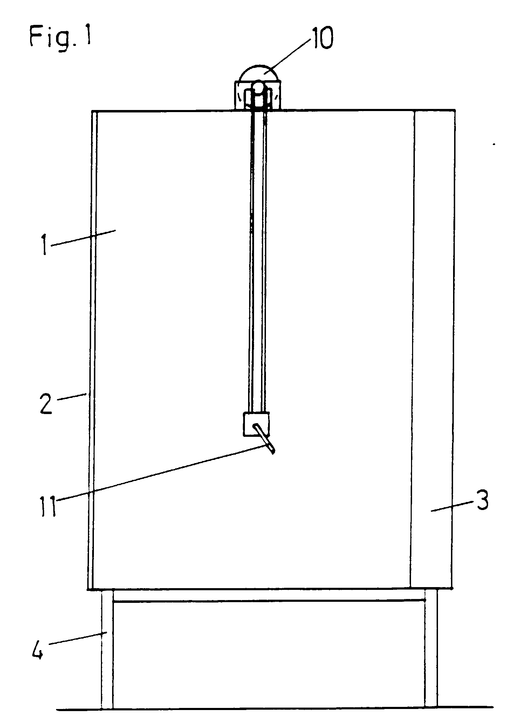

Fig. 1 eine Seitenansicht der erfindungsgemäßen Einrichtung,

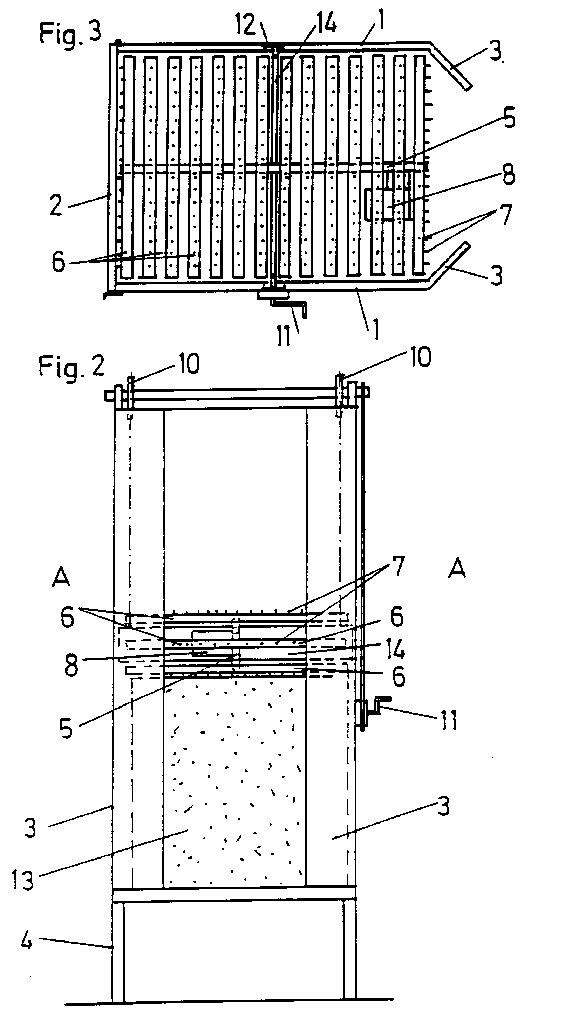

Fig. 2 die dazugehörige Vorderansicht und
Fig. 3 eine Ansicht von oben auf eine entlang der Linie A-A in Fig. 2 geschnittene Einrichtung.

Wie sich den Figuren entnehmen läßt, weist die erfindungsgemäße Einrichtung eine äußere Umhüllung auf, die aus zwei Seitenwänden 1 und einer schwenkbaren Türe 2 an der Einbringungsseite besteht. An der Ausbringungsseite sind zusätzlich zwei Leitwände 3 angeordnet, die eine sich verjüngende Austragöffnung bilden. Die Umhüllung wird insgesamt durch ein Gerüst 4 am Boden abgestützt.

Die eigentliche, innerhalb dieser Umhüllung angeordnete Schabeinrichtung liegt aufgrund ihres Eigengewichtes auf dem in die Umhüllung eingebrachten Preßballen 13 auf. Die Schabeinrichtung besteht im wesentlichen aus einer Lastgliederkette 5, die über zwei Kettenräder geführt ist. An der Lastgliederkette 5 sind Werkzeugträger 6 befestigt, die sich quer zur Bewegungsrichtung der Gliederkette 5 über die gesamte Breite der Oberfläche des Preßballens 13 erstrecken. Die Werkzeugträger 6 sind jeweils mit einer Vielzahl von scharfkantigen Zerkleinerungs- bzw. Schabwerkzeugen 7 versehen, wie beispielsweise Heuwenderzinken aus Federstahl. Der Antrieb der Lastgliederkette 5 erfolgt über einen mittels Schleppkabel gespeisten Elektromotor 8 (Kurzschlußläufer), der über ein Untersetzungsgetriebe mit einem der Kettenräder in Verbindung steht.

Bei der Anwendung der Schabeinrichtung wird wie folgt vorgegangen: Zum Einbringen der Preßballen 13 in die Umhüllung muß einerseits die Türe 2 geöffnet werden und andererseits die Schabeinrichtung angehoben werden. Das Anheben erfolgt händisch mittels einer Handkurbel 11, die in starrer Welle mit zwei Seiltrommeln 10 verbunden ist. Die freien Enden der auf den Seilrollen 10 aufgewickelten Seile stehen mit einem Querschwert 14 in Verbindung, mit dem die Schabeinrichtung auf- und abbewegt wird. Dieses Querschwert 14 ist in zwei vertikalen Führungsschienen 12 in den Seitenwänden 1 mittels Führungsrollen gelagert.

Nachdem der Preßballen 13 unter der hochgezogenen Schabeinrichtung eingelegt wurde, kann diese abgesenkt werden und liegt in der Folge durch ihr Eigengewicht am Preßballen 13 auf. Durch Aktivierung des Motors 8 werden die Werkzeugträger 6 mit den daran befestigten Zerkleinerungs- bzw. Schabwerkzeugen 7 in Bewegung versetzt, wodurch die Oberfläche des Preßballens 13 kontinuierlich abgetragen wird. Durch das Eigengewicht der auf dem Preßballen 13 aufliegenden Schabeinrichtung wird sichergestellt, daß aufgrund der auf die Einrichtung einwirkenden Schwerkraft stets ein ausreichender Anpreßdruck gegeben ist. Ist ein Preßballen 13 zur Gänze abgearbeitet, wird die Schabeinrichtung wiederum hochgezogen und ein neuer Ballen eingelegt.

## Patentansprüche

1. Verfahren zur Bereitstellung von Blumenerde, wobei die Blumenerde zuerst zu Ballen verpreßt wird, dadurch gekennzeichnet, daß die Auflockerung, Verkleinerung und Verteilung des Preßballens (13) durch maschinelles Abschaben der Oberfläche einer Planfläche des Preßballens (13) erfolgt.

2. Verfahren nach Anspruch 1, dadurch gekennzeichnet, daß der zum Abschaben notwendige Anpreßdruck durch das Eigengewicht der hierfür vorgesehenen an Preßballen (13) aufliegenden Einrichtung erzielt wird.

3. Verfahren nach Anspruch 1 oder 2, dadurch gekennzeichnet, daß die vom Preßballen (13) abgearbeitete, aufgelockerte Blumenerde einer Topfmaschine zugeführt wird.

4. Einrichtung zur Durchführung des Verfahrens nach einem der Ansprüche 1 bis 3, dadurch gekennzeichnet, daß an einer umlaufenden Lastgliederkette (5) Werkzeugträger (6) mit daran befestigten Zerkleinerungs- bzw. Schabwerkzeugen (7) angeordnet sind.

5. Einrichtung nach Anspruch 4, dadurch gekennzeichnet, daß sich die Werkzeugträger (6) quer zur Bewegungsrichtung der Lastgliederkette (5) erstrecken.

6. Einrichtung nach Anspruch 4 oder 5, dadurch gekennzeichnet, daß die Lastgliederkette (5) von einem Elektromotor (8) mittels eines Kettenrades antreibbar ist.

7. Einrichtung nach Anspruch 6, dadurch gekennzeichnet, daß die Lastgliederkette (5) mit unterschiedlicher Geschwindigkeit antreibbar ist.

8. Einrichtung nach Anspruch 7, dadurch gekennzeichnet, daß der Anstellwinkel der Zerkleinerungs- bzw. Schabwerkzeuge (7) einstellbar ist.

9. Einrichtung nach einem der Ansprüche 4 bis 8, dadurch gekennzeichnet, daß die Einrichtung in vertikalen Führungsschienen (12) höhenverschieblich geführt ist.

10. Einrichtung nach Anspruch 9, dadurch gekennzeichnet, daß die Einrichtung mittels mit einer Handkurbel (11) verbundenen Seiltrommeln (10) anhebbar ist.
